# EUROPÄISCHE PATENTSCHRIFT

(11) **EP 3 462 829 B1**
(45) Veröffentlichungstag und Bekanntmachung des Hinweises auf die Patenterteilung: **08.07.2020**
(21) Anmeldenummer: 17730046.4
(22) Anmeldetag: 24.05.2017
(51) Int. Cl.: A01C 15/00

(54) **VORRATSBEHÄLTER MIT ABDECKUNG FÜR EINE LANDWIRTSCHAFTLICHE VERTEILMASCHINE**
RESERVOIR HAVING A COVER FOR AN AGRICULTURAL DISTRIBUTING MACHINE
TRÉMIE DE COMPENSATION DOTÉE D'UN COUVERCLE POUR DISTRIBUTEUR AGRICOLE

(30) Priorität: 24.05.2016 DE 102016109473
(43) Veröffentlichungstag der Anmeldung: 10.04.2019
(73) Patentinhaber: Lemken GmbH & Co. KG, 46519 Alpen (DE)
(72) Erfinder: BERENDSEN, Mark, 7044 AJ Lengel (NL); BERGERFURTH, Dennis, 46459 Rees (DE); GEBBEKEN, Martin, 46519 Alpen (DE); GERAATS, Marcel, 41334 Nettetal (DE); GOTZEN, Christian, 41751 Viersen (DE); VAN KANN, Andreas, 53949 Dahlem (DE); LUKAS, Thomas, 48683 Ahaus-Wüllen (DE); PAESSENS, Christian, 47661 Issum (DE); WERRIES, Dieter, 46519 Alpen (DE)
(86) Internationale Anmeldenummer: PCT/DE2017/100445
(87) Internationale Veröffentlichungsnummer: WO 2017/202422

(56) Entgegenhaltungen:
- EP-A1- 2 420 123
- EP-A1- 2 868 182
- EP-A2- 2 286 651
- DE-A1-102011 001 519
- US-A- 4 496 184
- US-A- 5 112 100

## Beschreibung

Die Erfindung betrifft einen Vorratsbehälter mit Abdeckung für eine landwirtschaftliche Verteilmaschine gemäß dem Oberbegriff des Patentanspruches 1.

Die deutsche Offenlegungsschrift DE 19 818 064 A1 zeigt eine Verteilmaschine mit faltbarer Abdeckplane. Wenngleich die Plane den Behälter in geschlossenem Zustand überdeckt, kommt es zu Wassereintritt durch Niederschlag bei Fahrtwind. Zugleich wird auch einem Staubaustritt bei Staubentstehung im Inneren des Behälters nicht wirksam entgegengewirkt. EP2868182A1 zeigt eine faltbare Abdeckplane mit motorisch angetriebenem Hilfsrahmen. Des Weiteren ist ein starrer Deckel eines Vorratsbehälters aus EP 2 232 975 A1 bekannt, welcher zwar umlaufend mit einer verpressten Kederdichtung ausgestattet ist, jedoch eine starre, schwere und in sich formstabile Abdeckung benötigt, welche das Leergewicht des Vorratsbehälters erhöht und hohe Betätigungskräfte zum Öffnen der Abdeckung als auch zum Dichten derselben benötigt. EP2286651A2 zeigt einen luftdruck-beaufschlagten Behälter mit einem Hilfsrahmen und druckabdichtender Abdeckplane. EP2420123A1 ergänzt die Lösung aus EP2286651A2, indem eine Dichtung zwischen Hilfsrahmen und Abdeckplane angeordnet ist, welche die Abdeckplane auf die Behälteraußenfläche drückt und dadurch abdichtet.

Aufgabe der Erfindung ist es, eine robuste Abdecklösung für einen Vorratsbehälter bereitzustellen, welche leicht gebaut, kostengünstig und flexibel herzustellen ist sowie die oben genannten Nachteile vermeidet.

Diese Aufgabe wird durch die Merkmale des kennzeichnenden Teiles des Anspruches 1 gelöst.

Durch Verwendung einer flexiblen Abdeckung, wie beispielsweise einer Plane, Folie oder einem Gewebe, kann diese passend zu verschiedenen Behälteröffnungen ohne großen Aufwand konfektioniert werden. In dem ein Großteil der Berandung der flexiblen Abdeckung mit Dichtungselementen versehen ist, welche selbsthaltend und dennoch mit leichtem Kraftaufwand lösbar mit der Öffnungsberandung des Vorratsbehälters zusammenwirken, wird eine einfache, umlaufend wirkende Abdichtungslösung geschaffen.

Durch Verklemmen oder Verkleben eines Teilbereichs der Abdeckung mit dem Behälter, wobei der Teilbereich nahezu linear ausgebildet ist, wird mit dem Teilbereich der Abdeckung, welcher an diese Befestigungsstellen grenzt, eine Scharnierachse oder ein biegsames Scharnier geschaffen, dabei ist die Abdeckung funktional schwenkend und verliersicher mit dem Vorratsbehälter verbunden.

Ist der Vorratsbehälter bzw. seine Einfüllöffnung aus Stahlblech geschaffen oder mit einer umlaufenden Stahlblechleiste versehen, kann eine durchgehende oder in Segmenten ausgebildete Magnetleiste an die Berandung der Abdeckung befestigt werden, beispielsweise durch Ankleben oder Vernähen. Ebenso können Blechstreifen an die Abdeckung geklebt oder in diese eingenäht werden und eine korrespondierende Magnetleiste durchgehend oder segmentiert um die Einfüllöffnung des Behälters herum angebracht werden. Eine Anbringung von gegensätzlich gepolten Magnetleisten, jeweils an Abdeckung und Einzelöffnung, erhöht die Haftwirkung der Magnetleisten weiter.

Alternativ zu den Magnetleisten können, ähnlich wie zuvor beschrieben, auch Klettstreifen als selbsthaltende und dennoch lösbare Verbindungselemente eingesetzt werden, wie sie beispielsweise aus Kleidung oder Schuhwerk bekannt sind. Insbesondere bietet sich an, die jeweiligen Haftelemente des Klettverschlusses behälterseits mit oder an der Behälterberandung zu verklemmen oder zu verkleben und seitens der Abdeckung zu verkleben oder zu vernähen. Sowohl die Klettverschlussstreifen als auch die Magnetleisten können durch geringen Kraftaufwand von der Dichtfläche des Behälters fortlaufend abgezogen werden als auch selbsthaftend oder durch leichten Anpressdruck unterstützt nahezu selbstdichtend wieder aufgelegt werden.

Eine weitere besonders geeignete, selbsthaltende und leicht zu lösende Dichtung zwischen Behälterberandung und Abdeckung stellt ein Reißverschluss dar. Die jeweiligen Halbstreifen des Reißverschlusses werden ebenfalls behälterseits mit der Behälterberandung verklebt oder abdichtend geklemmt und auf der anderen Seite mit der Abdeckung in ihrem Berandungsbereich vernäht oder verklebt. Wie bei einer Jacke werden durch den Reißverschluss die Abdeckung und die Behälterberandung mit geringem Kraftaufwand wetterfest, dicht und selbsthaltend miteinander verbunden. Dabei kann der Reißverschluss in mehrere Segmente aufgeteilt sein, ebenso sind mehrere, gegenläufige Verschlusselemente des Reißverschlusses sowohl für einen durchgehenden Reißverschluss als auch für einzelne Segmente vorteilhaft denkbar.

Der Querschnitt der Dichtungselemente ist in zwei Funktionsbereiche aufgeteilt, nämlich einen Befestigungsbereich und einen Dichtbereich, so kann die Dichtwirkung durch gegeneinander gerichtete oder verpresste Dichtelemente, welche durch in unmittelbarer Nähe zu den Dichtelementen parallel verlaufende, kraft- oder formschlüssige Halteelemente, welche die Dichtelemente gegeneinander halten, erheblich gesteigert werden. Die Dichtelemente sind vorzugsweise als Dichtstreifen, Dicht- oder Kederprofile ausgeführt. Diese verformen sich aus einem vorzugsweise Rund- oder Ovalquerschnitt in ein verpresstes Profil, sobald sie durch den verschlossenen Reißverschluss in einem definierten Dichtabstand gegeneinander gehalten werden. Auch ein einseitig angebrachtes Dichtprofil kann gegen die Berhälterberandung oder den umlaufenden Rand der Abdeckung eine entsprechende Dichtwirkung entfalten.

Insbesondere bei pneumatischen Verteilmaschinen, welche mit Differenzdrücken innerhalb und außerhalb des Vorratsbehälters arbeiten, um eine Materialförderung sowohl in Menge und/oder Qualität zu steigern, bieten sich zuvor genannte Möglichkeiten zum Verschluss und zur Abdeckung einer Behälteröffnung an. Dabei werden durch die Druckdifferenz innere Spannkräfte in der Abdeckung erzeugt, welche unterstützend auf die umlaufenden Dichtprofile einwirken bzw. auf diese umgelenkt werden können und die Dichtprofile verformen und deren Dichtwirkung erhöhen.

Um einer Verformung einer flexiblen Abdeckung, beispielsweise durch zuvor genannte Differenzdrücke, ebenso aber durch aufliegendes Niederschlagswasser oder Schmutz zu vermeiden, bietet sich eine Stützvorrichtung an, welche der flexiblen Abdeckung eine geplante Formgebung ermöglicht bzw. diese erhält.

Durch eine schwenkbare oder faltbare Anlenkung der Stützvorrichtung an dem Vorratsbehälter können sowohl Stützvorrichtung als auch Abdeckung in einer geöffneten Position gehalten oder kompakt verstaut werden, was sowohl eine manuelle als auch eine maschinelle Beladung des Behälters vereinfacht.

Wird die Behälteröffnung mit einem Hilfsrahmen versehen, kann in der Flansch- oder Befestigungsfläche zwischen Hilfsrahmen und Behälteröffnung Befestigungsstreifen mit einem Magnet- oder Blechband, Klettverschluss oder einer Reißverschlusshälfte eingeklemmt oder verpresst werden.

Dabei verläuft die Trennung zwischen Befestigungsstreifen und restlicher Abdeckung vorzugsweise senkrecht zur Behälteröffnung, damit in Materialrichtung der Abdeckung hauptsächlich nur eine Zugbelastung auf die Trennstelle entsteht. Fügt man der Abdeckung eine Aufrollvorrichtung hinzu, kann die Abdeckung kompakt auf eine Wickelachse aufgerollt und in einer zumindest teilweise geöffneten Position gehalten oder verstaut werden. Insbesondere mit einer Magnetleiste, einem Klettverschluss oder ähnlichen selbsthaltenden Verbindungen kann der Kraftaufwand zum Lösen der Verbindung zwischen der Abdeckung und dem Vorratsbehälter durch die Rollbewegung weiter verringert werden. Dabei tritt im Bereich der Wickelachse eine Schälbewegung zwischen Abdeckung und Behälter auf, welche naturgemäß nur eines geringen Kraftaufwandes bedarf, um die Verbindung zu lösen. Durch gegenläufiges Abwickeln der Abdeckung wird die Kraft oder formschlüssige Verbindung zwischen Abdeckung und Behälter auf Höhe der Wickelachse sicher und definiert wiederhergestellt.

Eine besonders ergonomische Ausführung erreicht man, indem zumindest ein Verschlusselement des Reißverschlusses mit einem beid- oder doppelseitigen Betätigungselement, beispielsweise einer Lasche oder einer Schlaufe versieht. So kann man von einem Podest am Behälterrand zuerst den Reißverschluss mit dem innen liegendem Betätigungselement verschließen, ohne den Behälterrand zu umfassen oder um den Behälter herumlaufen zu müssen und den restlichen Abschnitt, beispielsweise eine Armlänge, dann mit dem außenliegenden Betätigungselement zu verschließen. Entsprechend bequem, gleichwohl umgekehrt, verläuft das Öffnen der Abdeckung.

Die Erfindung zeichnet sich insbesondere dadurch aus, dass eine Verschlusseinrichtung für einen Behälter einer landwirtschaftlichen Verteilmaschine geschaffen wird, welche effektiv und selbsthaltend die Abdeckung auf einem Vorratsbehälter fixiert und verschließt sowie gegen Einflüsse durch Fahrtwind oder Druckdifferenzen abdichtet und welche durch geringen Kraftaufwand vom Behälter lösbar und somit zu öffnen oder zu schließen ist. Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig. 1 zeigt den Aufbau der landwirtschaftlichen Verteilmaschine,
Fig. 2 den Vorratsbehälter der Verteilmaschine mit geöffneter Abdeckung,
Fig. 3 den Vorratsbehälter mit geschlossener Abdeckung und
Fig. 4 die schematische Darstellung eines Abschnitts des Reißverschlusses.

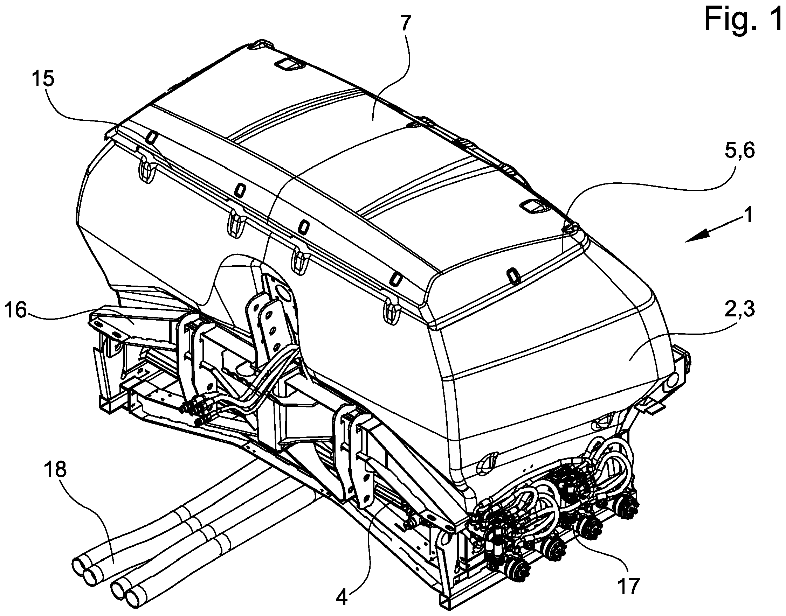

In Figur 1 ist der Vorratsbehälter 2 einer landwirtschaftlichen Verteilmaschine 1, hier in Fronttank-Ausführung, in perspektivischer Darstellung, von schräg hinten in Fahrtrichtung eines tragenden Fahrzeugs gesehen, dargestellt. Der Vorratsbehälter 2 ist in seinem Inneren als Hohlraum 3 zur Aufnahme von körnigem oder granuliertem Material ausgeführt und wird insgesamt von einem Maschinenrahmen 16 getragen, welcher wiederum an einem nicht dargestellten Fahrzeug oder Fahrgestell zur Fortbewegung der Verteilmaschine 1 befestigt ist. Der Vorratsbehälter 2 verfügt an seiner unteren Seite über Auslassöffnungen 4, welche in angetriebene Dosierorgane 17 zur definierten Abgabe von Material münden. Mit einem nicht dargestellten Gebläse wird das Material aus den Dosierorganen 17 mit einer Druckdifferenz in die Transportleitungen 18 in Richtung einer Ausbringeinrichtung wie beispielsweise einem Scharbalken, Prallteller oder dergleichen transportiert, welche sich über die Arbeitsbreite der Verteilmaschine 1 erstrecken. Dabei kann die Verteilmaschine 1 in ihrer Gesamtheit von einem Fahrzeug oder einem Fahrgestell getragen und an dieses an- oder aufgebaut werden. Ebenso, wie hier dargestellt, ist eine aufgelöste Bauweise möglich, indem Vorratsbehälter 2 und/oder Dosierorgane 17 in einem ersten Fahrzeug- oder Maschinenanbauraum und die weiteren Verteileinrichtungen in einem weiteren Anbauraum angeordnet und durch die Transportleitungen 18 miteinander verbunden sind. Mit dem Gebläse kann zugleich ein Überdruck im Hohlkörper 3 des Vorratsbehälters 2 erzeugt werden, um dem Materialfluss durch die Auslassöffnungen 4 in die Dosierorgane 17 für größere Aufwandmengen zu unterstützen bzw. zu erhöhen. An seiner oberen Seite ist der Vorratsbehälter 2 mit einer Einfüllöffnung 5 versehen, welche sich nahezu über die gesamte Breite und Länge des Vorratsbehälters 2 erstreckt. Die Einfüllöffnung 5 bildet die obere Berandung 6 des Vorratsbehälters 2 bzw. seines Hohlkörpers 3, welche durch die Abdeckung 7 verschlossen wird. Die Abdeckung 7 ist über eine Scharnierachse 15 mit der hinteren Oberkante des Behälters schwenkbar verbunden. Die Abdeckung selbst ist aus einem leicht verformbaren Material gefertigt, die einer Plane, einer Folie, einem dichten Gewebe oder einer Kombination dieser Materialien. Insbesondere hat sich die Verwendung einer gewebeverstärkten PVC-Folie bewährt, welche einfach zugeschnitten und konfektionieren werden kann. Die jeweiligen Eck- oder Randbereiche können leicht miteinander verklebt, verschweißt oder vernäht werden und halten große Zugbelastungen aus. Ein verschweißen erfolgt beispielsweise durch Ultraschall, thermisch oder kalt durch Verwendung von Lösungsmitteln. Auf gleiche Weise können an die Abdeckung 7 Dicht-, Halte- oder Verschlusselemente und weitere Funktionselemente angebracht werden. Abschnitte der Abdeckung, beispielsweise auf Höhe der Scharnierachse 15, welche nicht gelöst werden müssen, können mittels weiterer Klemmleisten direkt auf dem entsprechenden Behälterabschnitt verklemmt, vermietet oder verschraubt werden.

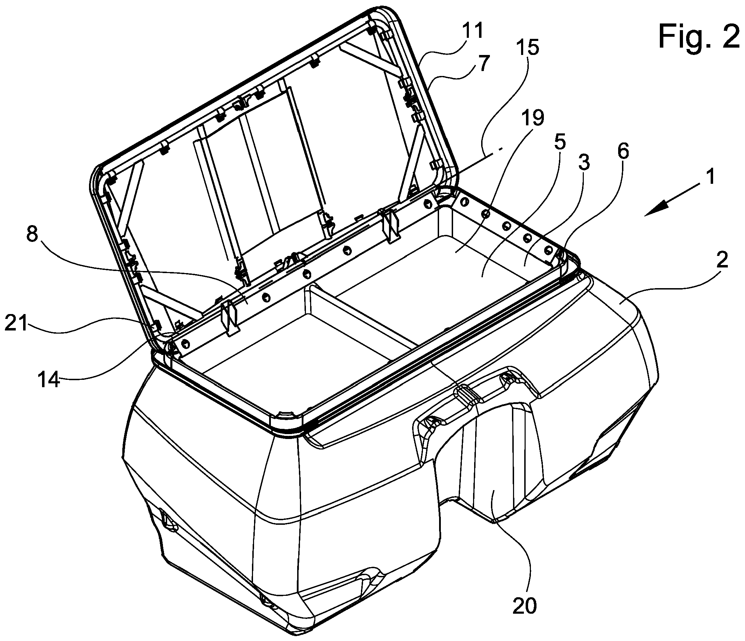

Figur 2 gibt, von schräg vorne gesehen, den Blick in den geöffneten Vorratsbehälter 2 bzw. seinen Hohlraum 3 der Verteilmaschine 1 frei. Gegen Eintritt von Fremdkörpern, welche die Dosierorgane beschädigen oder die Auslassöffnungen verstopfen könnten, ist ein Einlegesieb 19 oder Einlegegitter in die Einfüllöffnung 5 des Vorratsbehälters 2 eingebaut. Ein als nachgiebige Plane, Folie oder Gewebe ausgebildete Abdeckung 7 ist über mehrere Laschen 21 mit einer Stützvorrichtung 14 schwenkbar am Vorratsbehälter 2 bzw. an seiner oberen Berandung 6 schwenk-oder klappbar befestigt. Die Laschen 21 bestehen vorzugsweise aus dem gleichen Material wie die Abdeckung 7 oder aber aus einem anderen Gewebe und können an einem Ende mit der Abdeckung 7 über Druckknöpfe, Klebe- oder Schweißverbindungen oder Klettverschlüsse verbunden sein. Das andere Ende der Lasche 21 wird um Strukturteile der Stützvorrichtung 14 gelegt und ebenfalls, wie zuvor beschrieben, mit der Abdeckung 7 verbunden. Die Schwenkbewegung der Stützvorrichtung 14 und somit der Abdeckung 7 erfolgt dabei um die Scharnierachse 15, welche in diesem Fall durch einen Rohr- oder Profilabschnitt der Stützvorrichtung 14 in Verbindung mit behälterseits befestigten Rohrschellen gebildet wird. Ebenso kann ein hinterer Teilabschnitt 8 der Berandung 11 der Abdeckung 7 als eine Art Folienscharnier verwendet werden. Dieser Teilabschnitt 8 ist dann mit dem entsprechenden Abschnitt der Berandung 6 des Vorratsbehälters 2 fest verbunden. Das durch den Teilabschnitt 8 gebildete biegsame Scharnier kann mit weiteren biegsamen Verstärkungselementen wie Gummi- oder Gewebestreifen stabilisiert werden. Die Stützvorrichtung 14 ist als geschweißtes und/oder geschraubtes Rohrgestell ausgeführt und kann beispielsweise mit einer Feder und/oder Stützstrebe in geöffneter Stellung arretiert werden. Über die Stützvorrichtung 14 ragt die Berandung 11 der Abdeckung 7 hinaus. Schwenkt man die Stützvorrichtung 14 nach unten, verläuft die Berandung 11 der Abdeckung 7 etwa parallel zur Berandung 6 des Vorratsbehälters 2 bzw. seiner Einführungsöffnung 5. Eine Ausnehmung 20 dient zur Aufnahme eines nicht dargestellten Fördergebläses.

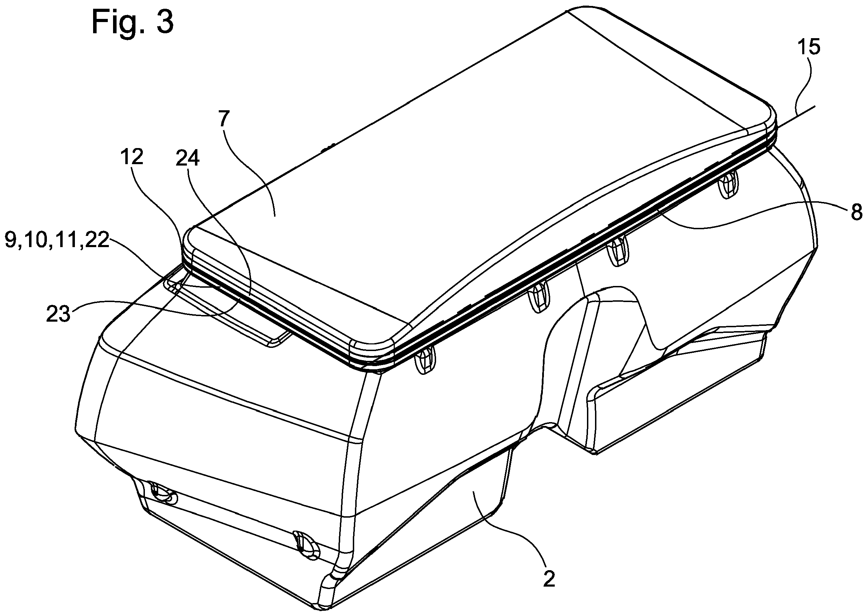

Figur 3 zeigt den Vorratsbehälter 2 mit geschlossener Abdeckung 7 mit Blick schräg von hinten auf durch die Abdeckung 7 verdeckte Scharnierachse 15, um welche die Abdeckung 7, wie vorheriger Figur beschrieben, nach oben öffnen und aufschwenken kann. Die Berandung 11 der als Plane, Folie oder Gewebe ausgeführten Abdeckung 7 ist in die Teilbereiche 8 und 9 aufgeteilt. Die Berandung 11 selbst wird zumindest im Teilbereich 9 als umlaufendes Dichtungselement 10 ausgeführt, in diesem Fall ein Reißverschluss. Dabei ist die Berandung 11 mit einer ersten Reißverschlusshälfte 23 besäumt, beispielsweise durch Kleben, Nähen oder Schweißen. Die zugehörige, zweite Reißverschlusshälfte 24 ist an der durch die Abdeckung 7 verdeckten, darunterliegenden Berandung des Vorratsbehälters 2 form- oder kraftschlüssig befestigt, beispielsweise durch Kleben, Niet- oder Klemmverbindungen. Die zweite Reißverschlusshälfte wird durch einen zusätzlichen Fortsatz, dem Verbindungselement 12, zur Behälterberandung verlängert oder verbreitert, um eine größere Befestigungsfläche zu erhalten. Fügt man nun die erste und die zweite Reißverschlusshälfte 23, 24 durch Betätigung eines Verschlusselementes des Reißverschlusses 22 umlaufend zusammen, ist die Abdeckung 7 nahezu luftdicht mit der Berandung des Vorratsbehälters 2 bzw. seiner Einfüllöffnung verschlossen. Ebenso einfach und mit geringstem Kraftaufwand kann die Verbindung umgekehrt wieder gelöst und die Abdeckung 7 geöffnet werden. Anstelle eines Reißverschlusses 22 können ebenso Magnetleisten, Klettstreifen oder ähnlich lösbare Verschlusselemente an die Berandung 11 der Abdeckung 7 appliziert werden.

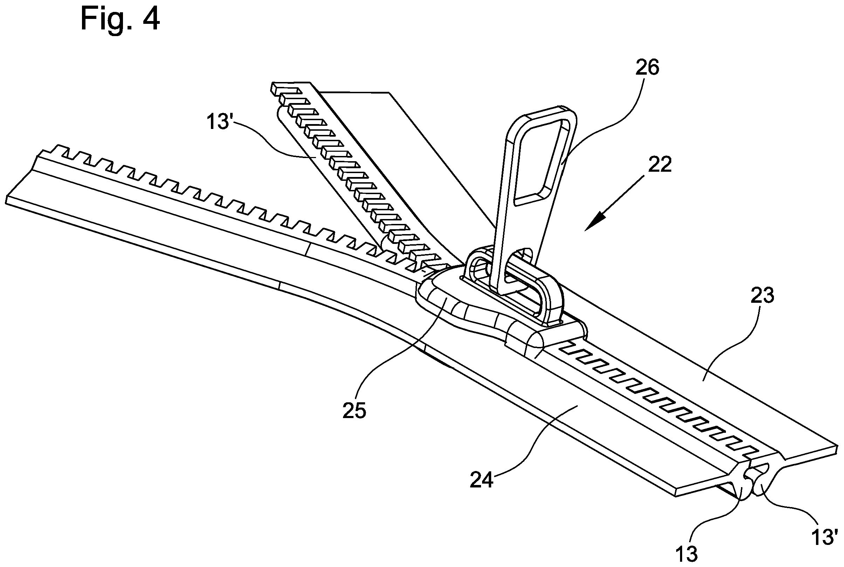

Figur 4 zeigt die schematische Darstellung eines Abschnitts des Reißverschlusses 22. Dieser besteht aus einer ersten und zweiten Verschlusshälfte 23, 24, welche jeweils eine Verzahnung aufweist, welche im verschlossenen Zustand ineinandergreifen. Das Schließen und Öffnen des Reißverschlusses 22 wird durch Hin- und Herschieben des Verschlusselementes 22 erreicht, welche die Verzahnungselemente definiert ineinanderfügt und miteinander verhakt. Anstelle einer Verzahnung können auch zueinander korrespondierende, durchgehende Profilhälften, wie sie beispielsweise von einem Gefrierbeutel bekannt sind, durch das Verschlusselement ineinandergefügt werden. Oberhalb des Verschlusselementes 25 ist eine Lasche als Betätigungselement 26 zum bequemen Hin- und Herschieben des Verschlusselementes 25 angebracht. Alternativ oder zusätzlich zur Lasche kann auch eine Seilschlaufe als Betätigungselement 26 angebracht werden. Damit der Reißverschluss von der Innen- und Außenseite betätigt werden kann, kann auf der gegenüberliegenden, verdeckten Seite des Verschlusselementes 25 ebenfalls ein Betätigungselement 26 gleichartig angebracht werden. Parallel zur Verzahnung oder zum Profil der jeweiligen Reißverschlusshälften 23, 24 sind Dichtungsprofile 13, 13' angeformt. Diese stehen schräg vom Querschnitt der Reißverschlusshälften 23, 24 ab und enden etwa bündig an der geöffneten Trennstelle oder Verzahnung der jeweiligen Reißverschlusshälfte 23, 24. Sobald der Reißverschluss durch das Verschlusselement 25 verschlossen wird, werden die beiden Dichtungsprofile 13, 13' gegeneinander gedrückt und dichten luftdicht ab. Durch die schräge Anstellung der Dichtprofile 13, 13' gegeneinander bzw. zum Querschnitt des Reißverschlusses 22 wird die Dichtwirkung erhöht, wenn die beiden Dichtprofile 13, 13' mit einem Druckgefälle beaufschlagt werden, welches die beiden Dichtprofile weiter gegeneinanderdrückt. Die äußeren Enden der beiden Reißverschlusshälften 23, 24 werden jeweils mit der Berandung der Abdeckung bzw. mit dem Behälterrand verschweißt, vernäht, verklebt oder verklemmt. Als besonders vorteilhaft hat es sich erwiesen, wenn man auch die behälterseitige Reißverschlusshälfte 23 mit einem kurzen Fortsatz aus dem Material der Abdeckung versieht, um diesen dann am Behälterrand zu befestigen.

**BEZUGSZEICHENLISTE**

| | |
|---|---|
| 1 | Landwirtschaftliche Verteilmaschine |
| 2 | Vorratsbehälter |
| 3 | Hohlkörper |
| 4 | Auslassöffnung |
| 5 | Einfüllöffnung |
| 6 | Berandung |
| 7 | Abdeckung |
| 8 | Teilabschnitt |
| 9 | Teilabschnitt |
| 10 | Dichtungselement |
| 11 | Berandung |
| 12 | Verbindungselement |
| 13 | Dichtungsprofil |
| 14 | Stützvorrichtung |
| 15 | Scharnierachse |
| 16 | Maschinenrahmen |
| 17 | Dosierorgane |
| 18 | Transportleitung |
| 19 | Einlegesieb |
| 20 | Ausnehmung |
| 21 | Lasche |
| 22 | Reißverschluss |
| 23 | Reißverschlusshälfte |
| 24 | Reißverschlusshälfte |
| 25 | Verschlusselement |
| 26 | Betätigungselement |

## Patentansprüche

1. Vorratsbehälter (2) für eine landwirtschaftliche Verteilmaschine (1) zum Speichern von auszubringenden, granuliertem, körnigem oder gemahlenem Material oder landwirtschaftlichen Flüssigkeiten, wobei der Vorratsbehälter (2) einen Hohlkörper (3) zur Aufnahme des Materials aufweist, wobei der Hohlkörper im unteren Bereich in zumindest eine Auslassöffnung (4) mündet, wobei der Hohlkörper im oberen Bereich zumindest eine Einfüllöffnung (5) mit einer Berandung (6) aufweist, welche mit einer als nachgiebigen Plane, Folie oder Gewebe ausgebildeten Abdeckung (7) verschließbar ausgeführt ist,
wobei die Abdeckung (7) und die Berandung (6) der Einfüllöffnung (5) umlaufend oder zumindest in einem Teilabschnitt (9) jeweils über miteinander in Wirkverbindung stehende, parallel zueinander verlaufende, selbsthaltende und voneinander lösbare Dichtungselemente (10) miteinander verbunden sind, **dadurch gekennzeichnet,**
**dass** der Querschnitt der Dichtungselemente (10) in mehrere Abschnitte unterteilt ist, wobei ein erster Abschnitt mit kraft- oder formschlüssigen, selbsthaltenden Verbindungselementen (12) und ein zweiter Abschnitt aus zumindest zwei gegeneinander gerichteten Dichtungselementen (13, 13') oder zumindest einem Dichtungselement (13) und einer korrespondierenden Gegenfläche besteht.

2. Vorratsbehälter nach Anspruch 1,
**dadurch gekennzeichnet,**
**dass** eine Berandung (11) der Abdeckung (7) aus zumindest zwei Teilabschnitten (8, 9) besteht, wobei ein erster Abschnitt (8) fest mit dem Vorratsbehälter (2) verbunden ist und ein Biegescharnier bildet und zumindest ein weiterer Abschnitt (9) lösbar mit dem Behälter (2) verbunden ist.

3. Vorratsbehälter nach Anspruch 1 oder 2,
**dadurch gekennzeichnet,**
**dass** die Dichtungselemente (10) als umlaufende Magnetleisten ausgebildet sind.

4. Vorratsbehälter nach einem der vorstehenden Ansprüche,
**dadurch gekennzeichnet,**
**dass** die Dichtungselemente (10) als umlaufende Klettverschlussstreifen ausgebildet sind.

5. Vorratsbehälter nach einem der vorstehenden Ansprüche,
**dadurch gekennzeichnet,**
**dass** die Dichtungselemente (10) als Reißverschluss ausgeführt sind.

6. Vorratsbehälter nach einem der vorstehenden Ansprüche,
**dadurch gekennzeichnet,**
**dass** der Vorratsbehälter (2) mit einem von dem atmosphärischen Druck abweichenden Über- oder Unterdruck beaufschlagbar ausgeführt ist.

7. Vorratsbehälter nach einem der vorstehenden Ansprüche,
**dadurch gekennzeichnet,**
**dass** der Vorratsbehälter (2) im Bereich der Einfüllöffnung (5) mit einer Stützvorrichtung (14) zur formgebenden oder formerhaltenden Abstützung oder Fixierung der Abdeckung (7) versehen ist.

8. Vorratsbehälter nach Anspruch 7,
**dadurch gekennzeichnet,**
**dass** die Stützvorrichtung (14) schwenk- oder faltbar über zumindest eine Scharnierachse (15) mit dem Vorratsbehälter verbunden ist.

9. Vorratsbehälter nach einem der vorstehenden Ansprüche,
**dadurch gekennzeichnet,**
**dass** der Vorratsbehälter (2) mit einem Hilfsrahmen (16) ausgestattet ist, wobei zumindest ein Außenabschnitt der Abdeckung (7) zwischen Vorratsbehälter (2) und Hilfsrahmen (16) kraft- und/oder formschlüssig befestigt ist und die Schnittstelle zur lösbaren Verbindung bzw. dem Dichtungselement (10) der Abdeckung bildet.

10. Vorratsbehälter nach Anspruch 9,
**dadurch gekennzeichnet,**
**dass** der Bereich der lösbaren Verbindung bzw. dem Dichtungselement (10) der Abdeckung (7) zum Vorratsbehälter (2) etwa aufrecht von der Außenfläche des Vorratsbehälters (2) absteht.

11. Vorratsbehälter nach einem der vorstehenden Ansprüche,
**dadurch gekennzeichnet,**
**dass** die Abdeckung (7) mit einer Rollvorrichtung versehen ist.

12. Vorratsbehälter nach Anspruch 5,
**dadurch gekennzeichnet,**
**dass** die als Reißverschluss ausgeführten Dichtelemente (10) zumindest ein Verschlusselement des Reißverschlusses aufweisen, welches sowohl auf der Innen- als auch auf der Außenseite der Abdeckung mit einem Betätigungselement versehen ist.

## Claims

1. A reservoir (2) for an agricultural distribution machine (1) for storing granulated, grainy or ground material or agricultural liquids to be spread out, wherein the reservoir (2) comprises a hollow body (3) for receiving the material, wherein the hollow body in the lower region opens into at least one outlet opening (4), wherein the hollow body in the upper region comprises at least one filling opening (5) with a rim (6), which is embodied so as to be closable with a cover (7) formed as a flexible tarpaulin, film or fabric,
wherein the cover (7) and the rim (6) of the filling opening (5) are connected to one another circumferentially or at least in a part portion (9) each by way of sealing elements (10) that are operatively connected to one another, extend parallel to one another, are self-retaining and detachable from one another,
**characterized**
**in that** the cross section of the sealing elements (10) is subdivided into multiple portions, wherein a first portion consists of force-fit or form-fit, self-retaining connecting elements (12) and a second portion of at least two sealing elements (13, 13') directed against one another or at least one sealing element (13) and a corresponding counter-surface.

2. The reservoir according to Claim 1,
**characterized**
**in that** a rim (11) of the cover (7) consists of at least two part portions (8, 9), wherein a first portion (8) is firmly connected to the reservoir (2) and forms a bending hinge and at least one further portion (9) is detachably connected to the reservoir (2).

3. The reservoir according to Claim 1 or 2,
**characterized**
**in that** the sealing elements (10) are formed as circumferential magnetic strips.

4. The reservoir according to any one of the preceding claims,
**characterized**
**in that** the sealing elements (10) are formed as circumferential Velcro closure strips.

5. The reservoir according to any one of the preceding claims,
**characterized**
**in that** the sealing elements (10) are embodied as zip fastener.

6. The reservoir according to any one of the preceding claims,
**characterized**
**in that** the reservoir (2) is embodied so as to be subjectable to an overpressure or underpressure deviating from the atmospheric pressure.

7. The reservoir according to any one of the preceding claims,
**characterized**
**in that** the reservoir (2) in the region of the filling opening (5) is provided with a support device (14) for the shaping or shape-retaining support or fixing of the cover (7).

8. The reservoir according to Claim 7,
**characterized**
**in that** the support device (14) is connected to the reservoir in a pivotable or foldable manner by way of at least one hinge axis (15).

9. The reservoir according to any one of the preceding claims,
**characterized**
**in that** the reservoir (2) is equipped with an auxiliary frame (16), wherein at least one outer portion of the cover (7) between reservoir (2) and auxiliary frame (16) is attached in a force-fit and/or form-fit manner and forms the interface to the detachable connection or the sealing element (10) of the cover.

10. The reservoir according to Claim 9,
**characterized**
**in that** the region of the detachable connection or the sealing element (10) of the cover (7) to the reservoir (2) projects from the outer surface of the reservoir (2) approximately in an upright manner.

11. The reservoir according to any one of the preceding claims, **characterized**
**in that** the cover (7) is provided with a rolling device.

12. The reservoir according to Claim 5,
**characterized**
**in that** the sealing elements (10) embodied as zip fastener comprise at least one closure element of the zip fastener which is provided with an actuating element both on the inside and also on the outside of the cover.

## Revendications

1. Réservoir de stockage (2), destiné à un épandeur agricole (1), pour stocker une matière granulée, granuleuse ou broyée ou des liquides agricoles qui doivent être distribués, le réservoir de stockage (2) comportant un corps creux (3) destiné à recevoir la matière, le corps creux débouchant dans la zone inférieure dans au moins une ouverture de sortie (4), le corps creux comportant dans la zone supérieure au moins une ouverture de chargement (5) pourvue d'une bordure (6), laquelle est réalisée pour être susceptible d'être fermée avec un recouvrement (7) conçu sous la forme d'une bâche, d'un film ou d'un tissu souple,
le recouvrement (7) et la bordure (6) de l'ouverture de chargement (5) étant reliés l'un à l'autre de manière périphérique ou au moins dans un segment partiel (9), respectivement par l'intermédiaire d'éléments d'étanchéité (10) se trouvant en liaison fonctionnelle réciproque, s'écoulant à la parallèle les uns des autres et désolidarisables les uns des autres,
**caractérisé**
**en ce que** la section transversale des éléments d'étanchéité (10) est divisée en plusieurs segments, un premier segment étant composé d'éléments de liaison (12) autobloquants, à complémentarité de force ou de forme et un deuxième segment consistant en au moins deux éléments d'étanchéité (13, 13') dirigés l'un vers l'autre ou en au moins un élément d'étanchéité (13) et en une surface antagoniste correspondante.

2. Réservoir de stockage selon la revendication 1,
**caractérisé**
**en ce qu'**une bordure (11) du recouvrement (7) consiste dans au moins deux segments partiels (8, 9), un premier segment (8) étant relié fixement avec le réservoir de stockage (2) et formant une charnière flexible et au moins un segment (9) supplémentaire étant relié de manière amovible avec le réservoir (2).

3. Réservoir de stockage selon la revendication 1 ou 2,
**caractérisé**
**en ce que** les éléments d'étanchéité (10) sont conçus sous la forme de baguettes magnétiques périphériques.

4. Réservoir de stockage selon l'une quelconque des revendications précédentes,
**caractérisé**
**en ce que** les éléments d'étanchéité (10) sont conçus sous la forme de rubans auto-agrippants périphériques.

5. Réservoir de stockage selon l'une quelconque des revendications précédentes,
**caractérisé**
**en ce que** les éléments d'étanchéité (10) sont réalisés sous la forme d'une fermeture éclair.

6. Réservoir de stockage selon l'une quelconque des revendications précédentes,
**caractérisé**
**en ce que** le réservoir de stockage (2) est réalisé de manière à pouvoir être soumis à une surpression ou à une dépression différente de la pression atmosphérique.

7. Réservoir de stockage selon l'une quelconque des revendications précédentes,
**caractérisé**
**en ce que** dans la zone de l'ouverture de chargement (5), le réservoir de stockage (2) est muni d'un dispositif d'appui (14) destiné à assurer un appui conférant ou préservant la forme ou une fixation du recouvrement (7).

8. Réservoir de stockage selon la revendication 7,
**caractérisé**
**en ce que** le dispositif d'appui (14) est relié avec le réservoir de stockage en étant susceptible de pivoter ou d'être plié par l'intermédiaire d'au moins un axe charnière (15).

9. Réservoir de stockage selon l'une quelconque des revendications précédentes,
**caractérisé**
**en ce que** le réservoir de stockage (2) est équipé d'un cadre auxiliaire (16), au moins un segment extérieur du recouvrement (7) entre le réservoir de stockage (2) et le cadre auxiliaire (16) étant fixé par complémentarité de force et/ou de forme et formant l'interface pour la liaison amovible ou vers l'élément d'étanchéité (10) du recouvrement.

10. Réservoir de stockage selon la revendication 9,
**caractérisé**
**en ce que** la zone de la liaison amovible ou de l'élément d'étanchéité (10) du recouvrement (7) sur le réservoir de stockage (2) déborde approximativement au droit de la surface extérieure du réservoir de stockage (2).

11. Réservoir de stockage selon l'une quelconque des revendications précédentes,
**caractérisé**
**en ce que** le recouvrement (7) est muni d'un dispositif de roulement.

12. Réservoir de stockage selon la revendication 5,
**caractérisé**
**en ce que** les éléments d'étanchéité (10) réalisés sous la forme d'une fermeture éclair comportent un élément de fermeture de la fermeture éclair, lequel aussi bien sur la face intérieure que sur la face extérieure du recouvrement est muni d'un élément de manoeuvre.
